# DEMANDE DE BREVET EUROPEEN

(11) **EP 4 379 324 A1**
(43) Date de publication de la demande: **05.06.2024**
(21) Numéro de dépôt: 23213602.8
(22) Date de dépôt: 01.12.2023
(51) Int. Cl.: G01D 5/244, H02K 11/21, H02K 15/00

(54) **PROCÉDÉ DE RÉGLAGE D'UN DISPOSITIF DE MESURE COMPRENANT AU MOINS UN CAPTEUR DE POSITION**

(30) Priorité: 02.12.2022 FR 2212723
(71) Demandeur: VALEO EQUIPEMENTS ELECTRIQUES MOTEUR, 94046 Créteil Cedex (FR)
(72) Inventeur: DEBRUYNE, Hubert, 62630 Etaples-sur-Mer (FR); FAVEROLLE, Pierre, 94046 CRETEIL CEDEX (FR); TOP, Marc, 62630 Etaples-sur-Mer (FR); CAMBRONNE, Olivier, 62630 Etaples-sur-Mer (FR); DELENTE, Romain, 62630 Etaples-sur-Mer (FR); PILLOUD PASSIN, Aurele, 62630 Etaples-sur-Mer (FR); DELECROIX, Lionel, 62630 Etaples-sur-Mer (FR); HAMDI, Rachid, 38070 St Quentin Fallavier (FR)
(74) Mandataire: Valeo Powertrain Systems

(57) **Abrégé**

La présente invention vise un procédé de réglage d'un dispositif de mesure comprenant le positionnement du dispositif de mesure sur le stator (3), la fixation du dispositif sur le stator par des éléments de fixation (12), une première mise en rotation du rotor, la mesure de son signal et d'un signal du capteur, le calcul d'un angle de déphasage, la rotation d'un socle (14) du dispositif, une deuxième mise en rotation du rotor, le calcul d'un deuxième angle de déphasage, dans le cas où le deuxième angle de déphasage se trouve en dehors d'un intervalle, une itération des étapes précédentes est réalisée, et la fixation du dispositif de mesure sur le stator.

## Description

### DOMAINE TECHNIQUE

La présente invention concerne le domaine des machines électriques tournantes telles que des moteurs électriques ou des générateurs électriques pour des véhicules automobiles électriques ou hybrides.

L'invention concerne plus précisément les dispositifs de réglages pour de telles machines électriques tournantes et plus particulièrement un procédé de réglage d'un tel dispositif de mesure comprenant un capteur de position d'une machine électrique tournante.

### ETAT DE LA TECHNIQUE

De manière générale, une machine électrique tournante, par exemple un moteur à courant alternatif polyphasé, comprend un stator qui est une partie fixe par rapport à un bâti, par exemple une plateforme d'un véhicule électrique ou hybride, et un rotor qui est une partie mobile en rotation par rapport au stator. Les moteurs électriques à courant alternatif polyphasé sont généralement classifiés en deux catégories principales, les machines dites synchrones et les machines dites asynchrones, aussi appelées moteurs à induction.

Dans le cas des machines synchrones, le rotor présente un champ magnétique généré soit par des aimants permanents distribués sur la périphérie d'un arbre du rotor, soit par conducteurs enroulés autour de matériaux ferromagnétiques et alimentés par une source de tension continue également portés par le rotor, désignés électroaimants. Le stator comprend plusieurs phases, sur chacune desquelles est connectée au moins une bobine, aussi appelée enroulement, alimentée en courant et tension. Les moteurs synchrones à aimants permanents sont connus de l'homme du métier sous l'acronyme « PMAC » pour « Permanent Magnets AC motors ». Les PMAC sont en général plus efficaces et plus compactes que les moteurs à induction, en fonction de la qualité des aimants permanents utilisés, notamment s'il s'agit des aimants permanent à base d'un alliage Néodyme-Fe-Bore « NdFeB », ou bien à base d'un alliage Samarium-Cobalt « SmCo ».

Pour commander de tels moteurs PMAC et obtenir des performances élevées et précises, il est nécessaire de connaître en temps réel la position angulaire et la vitesse du rotor. Ces performances sont nécessaires, en particulier dans les applications automobiles de tels moteurs.

La position angulaire du rotor par rapport aux bobinages du stator est généralement donnée par un capteur de position lié au stator et d'une cible tournante liée mécaniquement au rotor, par exemple un des aimants du rotor. Ces capteurs sont par exemple des capteurs du type à effet Hall ou des capteurs inductifs. De tels capteurs nécessitent d'être calibrés, car la valeur correspondant au zéro électrique dudit capteur dépend du type de capteur, de son montage sur le rotor ou encore de l'instant de mise sous tension et est par défaut différente de la valeur réelle du zéro électrique correspondant à l'orientation angulaire entre le stator et le rotor pour laquelle la force électromotrice est nulle.

Cette opération est essentielle pour garantir les performances de la machine électrique, car la pratique montre à titre d'exemple qu'un décalage de 1° entre le stator et le rotor conduit à une chute du couple d'environ 5%, et un décalage de 2° conduit à une chute du couple de l'ordre de 20% par rapport à une valeur nominale.

Il est connu dans l'état de la technique différentes méthodes électriques ou logicielles permettant de corriger l'orientation angulaire du capteur de sorte que le zéro électrique de l'orientation du rotor par rapport au stator mesuré par le capteur corresponde, aussi fidèlement que possible, à l'orientation réelle. Néanmoins, ces méthodes présentent l'inconvénient de devoir être réalisées à nouveau, par exemple lorsqu'un onduleur connecté à la machine électrique doit être changé, ou lors d'opérations de maintenance. Ainsi, il est nécessaire de déconnecter le rotor de la chaîne de transmission mécanique pour l'entrainer à l'aide d'un outil extérieur ou bien dans certaines applications, notamment dans le cas d'un moteur de véhicule électrique ou hybride, entraîner en rotation les roues dudit véhicule, ce qui nécessite une opération de levage dudit véhicule. Ces contraintes rendent chaque réglage supplémentaire du capteur de position fastidieux, coûteux et redondant. Enfin, les réglages électriques ou logiciels ont la particularité d'être plus complexes à réaliser, et donc plus coûteux.

L'invention vise donc à remédier à tout ou partie des inconvénients de l'état de la technique, en proposant notamment un procédé mécanique de réglage d'un capteur de position simple et, en particulier, ne nécessitant d'être mis en oeuvre que lors de la première mise en service d'une machine électrique synchrone à aimants permanents.

### PRÉSENTATION DE L'INVENTION

Plus précisément, l'invention a pour objet un procédé de réglage d'un dispositif de mesure comprenant au moins un capteur de position pour une machine électrique tournante, comprenant un rotor et un stator, le procédé comprenant :
- le positionnement du dispositif de mesure sur le stator, en regard d'une cible fixée au rotor définissant une orientation d'origine ;
- la fixation du dispositif de mesure sur le stator par des éléments de fixation du dispositif de mesure, dans une position de réglage desdits éléments de fixation ;
- une première mise en rotation du rotor autour d'un axe de rotation du rotor par un arbre extérieur à la machine électrique pour un nombre déterminé de révolutions du rotor ;
- la mesure d'un signal électrique du stator sur au moins une phase du stator et la mesure d'un signal électrique du capteur de position ;
- le calcul d'un premier angle de déphasage entre le signal électrique du capteur de position et le signal électrique de la phase du stator ;
- la rotation d'un socle du dispositif de mesure autour de l'axe de rotation du rotor de l'orientation d'origine vers une orientation corrigée, l'angle entre l'orientation d'origine et l'orientation corrigée étant égal à l'angle de déphasage calculé ;
- une deuxième mise en rotation du rotor par l'arbre extérieur pour un nombre déterminé de révolutions du rotor ;
- le calcul d'un deuxième angle de déphasage entre le signal électrique du capteur de position et le signal électrique de la phase du stator ;
- dans le cas où le deuxième angle de déphasage se trouve en dehors d'un intervalle défini par un seuil maximal et un seuil minimal, une itération des étapes précédentes, à partir de la première mise en rotation du rotor, est réalisée en définissant l'orientation corrigée comme nouvelle orientation d'origine ;
- la fixation du dispositif de mesure sur le stator par les éléments de fixation, selon l'orientation corrigée déterminée, dans une position d'exploitation des éléments de fixation.

Grâce à une telle combinaison de caractéristiques, un tel procédé de réglage mécanique permet d'obtenir une précision supérieure de la position angulaire d'un capteur de position par le biais d'une correction mécanique par itération, moins coûteuses que des alternatives électroniques et logicielles. L'orientation angulaire présente aussi l'avantage de pouvoir être réglée à partir d'un équipement extérieur unique configuré pour fixer le dispositif de mesure sur le stator en plus d'entraîner en rotation le socle du dispositif de mesure.

Par le vocable « position de réglage », on entend une position temporaire des éléments de fixation dans laquelle le dispositif de mesure est maintenu en position pour la durée du procédé de réglage, par exemple en appliquant une précontrainte aux éléments de fixations. La rotation du socle du dispositif par un équipement extérieur est ainsi autorisée et toute autre rotation indésirée est bloquée.

Par le vocable « position d'exploitation », on entend une position durable des éléments de fixation dans laquelle le dispositif de mesure est maintenu en position pour des phases d'exploitation de la machine électrique tournante, toute rotation du socle du dispositif est ainsi bloquée.

Avantageusement, le seuil maximal est inférieur ou égal à 2°, de préférence encore inférieur ou égal à 1° et le seuil minimal est supérieur à -2°, de préférence encore supérieur ou égal à -1°, le seuil maximal étant supérieur au seuil minimal.

Avantageusement, le signal électrique du capteur de position et le signal électrique de la phase du stator sont mesurés à chaque révolution du rotor, un signal électrique moyen du capteur de position et un signal électrique moyen de ladite au moins une phase du stator, calculés à partir des mesures successives au cours de chacune des révolutions. Dans une telle configuration, la précision et la fiabilité des angles de déphasages obtenus sont renforcées, ce qui améliore le réglage du dispositif de mesure et, enfin, le rendement et les performances futures de la machine électrique.

Avantageusement, la mesure du signal électrique du stator est réalisée sur trois ou six phases du stator. Optionnellement, la mesure du signal électrique du stator est réalisée sur l'intégralité des phases du stator. Dans une telle configuration, le dispositif de mesure peut comprendre une pluralité de capteurs chacun en regard d'une cible fixée au rotor, et une pluralité de signaux électriques du stator sont mesurés. En outre, un angle de déphasage moyen peut ainsi être calculé, ce qui augmente encore la fiabilité et la précision du réglage.

Avantageusement, le nombre de révolution du rotor est supérieur ou égal à 2 révolutions, notamment supérieur ou égal à 5 révolutions . Plus le nombre de révolution du rotor est élevé et plus la précision de la mesure des signaux électriques est grande. En particulier, avec un nombre de révolution satisfaisant, les effets transitoires agissant sur l'ensemble des composants électriques du dispositif de mesure et de la machine électrique disparaissent, les mesures sont alors réalisées dans des conditions correspondant aux conditions de la phase d'exploitation prépondérante de ladite machine électrique.

Avantageusement, lors de la mise en rotation du rotor, l'arbre extérieur entraîne le rotor à une vitesse de rotation déterminée, la vitesse de rotation étant de préférence comprise entre 200 tours/min et 1500 tours/min.

Avantageusement, dans la position de réglage, un couple de serrage de réglage est appliqué aux éléments de fixation. Le couple de serrage de réglage peut être compris entre 0,8 N.m et 1,2 N.m, notamment compris entre 0,9 N.m et 1,1 N.m.

Avantageusement, dans la position d'exploitation, un couple de serrage d'exploitation est appliqué aux éléments de fixation. Le couple de serrage d'exploitation peut être supérieur au couple de réglage, notamment 5 fois supérieur, notamment 10 fois supérieur. Le couple de serrage d'exploitation peut être compris entre 3 N.m et 4 N.m.

Avantageusement, une information de la valeur du deuxième angle de déphasage est stockée par le capteur de position, ladite information pouvant être stockée matériellement et/ou numériquement. Dans une telle configuration, le procédé de réglage n'a besoin d'être réalisé qu'une seule fois à la mise en service de la machine électrique tournante et du dispositif de mesure associé et le réglage peut être effectué à nouveau après une opération de maintenance visant à changer un élément du circuit électrique, par exemple un onduleur connecté aux phases de la machine électrique tournante. Le procédé peut ainsi par exemple comprendre une étape de gravure de la valeur de l'angle sur le socle du dispositif de mesure ou une étape d'impression d'une étiquette de la valeur de l'angle collée sur le capteur. En outre, l'information peut être stockée au format numérique sur un moyen de stockage interne ou externe au dispositif de mesure.

Selon un autre aspect de l'invention, celle-ci a trait à un dispositif de mesure pour la mise en oeuvre d'un procédé de réglage tel que décrit ci-dessus, le dispositif de mesure comprenant :
- un capteur de position pour une machine électrique tournante, ladite machine tournante comprenant un rotor et un stator ;
- un socle mobile en rotation entre une orientation d'origine et une orientation corrigée dans lequel est logé le capteur de position ;
- des éléments de fixation mobiles entre une position de réglage et une position d'exploitation configurés pour fixer le socle à une extrémité axiale du stator de la machine électrique ;
le dispositif de mesure étant caractérisé en ce que le socle comprend une denture configurée pour coopérer avec une denture d'une broche extérieur pour entraîner le capteur de position et le socle en rotation.

Selon un autre aspect de l'invention, celle-ci a trait à une machine électrique tournante comprenant un stator, un rotor et un dispositif de mesure comme décrit ci-dessus.

Selon un autre aspect de l'invention, celle-ci a trait à un engin de mobilité comprenant une machine électrique comme décrit ci-dessus.

### PRÉSENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :

La figure 1 est une représentation schématique d'une machine électrique tournante comprenant un stator, selon un premier aspect de l'invention ;

La figure 2 est une représentation schématique d'un dispositif de mesure de position selon un autre aspect de l'invention ;

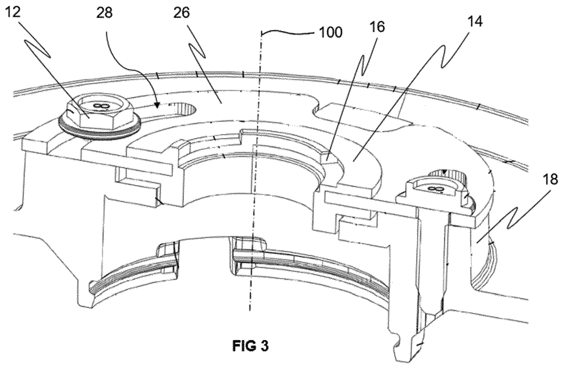

La figure 3 est une représentation schématique, en coupe axiale, d'un socle de dispositif de mesure.

Il faut noter que les figures exposent l'invention de manière détaillée pour permettre de mettre en oeuvre l'invention ; bien que non limitatives, lesdites figures servent notamment à mieux définir l'invention le cas échéant.

### DESCRIPTION DETAILLEE DE L'INVENTION

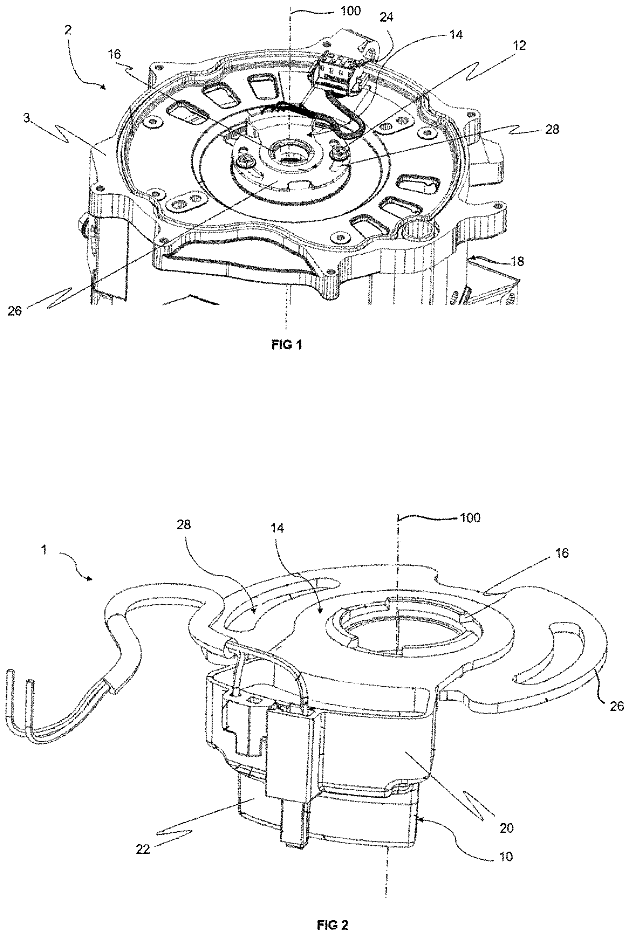

La figure 1 est une représentation schématique d'une machine électrique tournante 2 comprenant un stator 3 et un dispositif de mesure 1, selon un mode de réalisation de l'invention. La machine électrique tournante 2 dans cet exemple est un moteur électrique d'un véhicule automobile électrique ou hybride. Le moteur électrique peut avoir un voltage de 48V et une puissance de 15kW, par exemple.

L'invention s'applique également à d'autres types de machine électrique tournante tel qu'un alternateur ou un alterno-démarreur de véhicule automobile. Le stator 3 comprend un bobinage. On entend par bobinage, une bobine ou plusieurs bobines à base de fils de cuivre électriquement conducteurs. La machine électrique tournante 3 comprend également un rotor mobile en rotation par rapport au stator 3 autour d'un axe de rotation 100 à l'intérieur du bobinage.

Au sens de l'invention, « axial », « axialement » se rapportent à une direction suivant une parallèle à l'axe de rotation 100. Le stator 3 comprend en outre un carter 18 entourant le stator 3 et le rotor pour les protéger.

Le dispositif de mesure de position 1 comprend un capteur de position 10 mesurant la position du rotor par rapport au stator 3. Le dispositif de mesure de position 1 peut comprendre plusieurs capteurs de position 10 pour mesurer la position et la vitesse du rotor. Le capteur de position 10 peut par exemple être un capteur à effet Hall ou un capteur de type inductif, ou encore un capteur optique. Le capteur 10 est relié à un connecteur électrique 24.

Le dispositif de mesure de position 1 est positionné dans une zone d'extrémité axiale du stator 3 de façon à permettre au capteur de position 10 de détecter une cible mobile en rotation reliée au rotor. La cible du rotor est par exemple un aimant permanent. La zone d'extrémité axiale correspond à une zone située entre le rotor et le palier et radialement à l'intérieur du bobinage du stator 3.

Le dispositif de mesure 1 comprend un boîtier 20 de forme incurvée avec une courbure ayant pour axe de courbure l'axe de rotation 100, comme illustré sur la figure 2. Le boitier 20 comprend une partie inférieure 22 de plus faible largeur, par exemple suivant la direction de l'axe central 100. Le capteur de position 10 est logé dans la partie inférieure 22 du boîtier 20.

Le dispositif de mesure de position 1 comprend un socle 14 en saillie axialement par rapport au boîtier 20. De préférence, le socle 14 fait saillie perpendiculairement par rapport au boîtier 20. Le boitier 20 est de préférence formé à partir d'un matériau polymère, par exemple un polymère plastique.

Le socle 14 comprend un flasque 26 s'étendant perpendiculairement à l'axe de rotation 100. Le flasque 26 comprend plusieurs trous oblongs 28 débouchants configurés pour loger des éléments de fixation 12 permettant de fixer le socle 14 au stator 3. Les éléments de fixation 12 sont par exemple un ensemble vis et rondelle, agencés de sorte qu'une tête de vis s'appuie sur une rondelle et que ladite rondelle s'appuie sur des bords des trous oblongs 28, la vis s'étendant à travers les trous oblongs pour coopérer avec des taraudages du carter 18 du stator 3.

Les éléments de fixation 12 sont ainsi mobiles entre une position de réglage et une position d'exploitation. Par « position de réglage », on entend une position temporaire des éléments de fixation 12 par exemple en appliquant une précontrainte aux éléments de fixations. La rotation du socle 14 du dispositif de mesure 1 par un équipement extérieur est ainsi autorisée et toute autre rotation indésirée est bloquée. Par « position d'exploitation », on entend une position durable des éléments de fixation 12 dans laquelle le dispositif de mesure 1 est maintenu en position pour des phases d'exploitation de la machine électrique tournante 2, toute rotation du socle 14 du dispositif étant ainsi bloquée. Le flasque 26 est de préférence formé à partir d'un métal, par exemple en acier inoxydable.

Selon un mode de réalisation, le flasque 26, le socle 14 et le boîtier 20 forment une même pièce composite.

Chaque trou oblong 28 présente une forme oblongue et incurvée autour de l'axe de rotation 100 en ayant pour centre de courbure l'axe de rotation 100.Les trous oblongs 28 sont suffisamment étendus pour permettre d'appliquer un mouvement de rotation au dispositif de mesure de position 1 pour calibrer les capteurs de position avec la cible du rotor. Les trous oblongs 28 s'étendent sur une longueur d'au moins 1 cm et de préférence d'au moins 2 cm.

Le socle 14 du dispositif de mesure 1 comprend une denture 16 en saillie axiale configurée pour coopérer avec une denture d'une broche extérieure pour entraîner le socle 14 et le capteur de position 10 en rotation autour de l'axe. De préférence, les dents de la denture 16 présentent des pentes, notamment des pentes égales à 5°.

Selon un autre aspect de l'invention, celle-ci a trait à un procédé de réglage du dispositif de mesure 1 tel que décrit précédemment. La suite de la description s'attache à détailler les étapes d'un tel procédé.

Le dispositif de mesure 1 est positionné en regard d'une cible fixée au rotor selon une orientation angulaire donnée du socle 14 dudit dispositif de mesure 1 par rapport au carter 18 du stator 3 autour de l'axe de rotation 100.

Le dispositif de mesure 1 est fixé sur le carter 18 du stator 3 selon l'orientation angulaire du socle définie à l'étape précédente. Les éléments de fixation 12 sont alors insérés dans le flasque 26 du socle 14 dans leur position de réglage. Un couple de serrage de réglage est appliqué, par exemple un couple de serrage de réglage compris entre 0,9 N.m et 1,1 N.m.

Le rotor est entraîné pour une première rotation autour de l'axe de rotation 100 par un arbre extérieur pour un nombre déterminé de révolutions du rotor. Par exemple, le nombre de révolutions est supérieur à 10. En pratique, plus le nombre de révolutions est élevé, et meilleure sera la précision du procédé de réglage, en s'assurant de la disparition des effets du régime transitoire électrique et mécanique subis par la machine électrique tournante 2.

Un signal électrique du stator 3 est mesuré sur au moins une phase du stator 3 et un signal électrique est mesuré sur chaque capteur de position 10. Dans le cas où le dispositif de mesure 1 comprend une pluralité de capteurs de position 10, un signal électrique est mesuré pour chaque capteur de position 10 et pour chacune des phases du stator 3. En outre, la mesure des signaux électriques des phases et des capteurs de position 10 est réalisée pour chaque révolution du rotor sur lui-même, et un signal électrique moyen de phase et un signal électrique moyen de capteur sont alors déterminés. De tels signaux présentent l'avantage d'être plus précis qu'une mesure instantanée.

Un premier angle de déphasage est alors calculé entre le signal électrique de capteurs de position 10 et le signal électrique de phases du stator, opération connue de l'homme du métier comme la détermination d'un retard temporel ou d'une avance temporelle d'un signal électrique par rapport à un autre signal électrique.

La rotation du rotor est arrêtée. Une rotation angulaire du socle 14 du dispositif de mesure 1 est alors réalisée par une broche extérieure venant coopérer la denture 16 du socle 14, de sorte que le dispositif de mesure 1 pivote de l'orientation d'origine vers une orientation corrigée, l'angle entre les deux orientations correspondant à l'angle de déphasage mesuré entre le signal électrique de phase et le signal électrique du capteur de position 10

Le rotor est entraîné pour une deuxième rotation autour de l'axe de rotation 100 par l'arbre extérieur pour un nombre déterminé de révolutions du rotor. Par exemple, le nombre de révolutions est supérieur à 10. En pratique, plus le nombre de révolutions est élevé, et meilleure sera la précision du procédé de réglage, en s'assurant de la disparition des effets du régime transitoire électrique et mécanique subis par la machine électrique tournante 2.

Un deuxième angle de déphasage est alors calculé entre le signal électrique de capteurs de position 10 et le signal électrique de phases du stator 3. La rotation du rotor est arrêtée.

Dans le cas où le deuxième angle de déphasage se trouve dans un intervalle défini par un seuil maximal et un seuil minimal, le dispositif de mesure 1 est alors fixé au carter 18 du stator 3 dans une position d'exploitation des éléments de fixation 12. Un couple de serrage d'exploitation est appliqué, par exemple un couple de serrage d'exploitation compris entre 3 N.m et 4 N.m.

Dans le cas où le deuxième angle de déphasage se trouve en dehors de l'intervalle formé par un seuil maximal et un seuil minimal, une itération des étapes précédentes, à partir de la première mise en rotation du rotor, est réalisée en définissant l'orientation corrigée comme nouvelle orientation d'origine. Tant que le deuxième angle de déphasage se trouve en dehors de l'intervalle, le procédé de réglage se poursuit de manière itérative.

Un tel procédé de réglage mécanique permet d'obtenir une précision supérieure de la position angulaire du capteur de position 10 par le biais d'une correction mécanique par itération, moins coûteuses que des alternatives électroniques et logicielles. En outre, la broche extérieure permettant la rotation du socle 14 autour de l'axe de rotation 100 est mutualisée avec des outils de fixation configurés pour appliquer un couple de serrage aux éléments de fixation 12. Dans une telle configuration, l'opération de fixation, en particulier l'opération de fixation dans la position d'exploitation des éléments de fixation est directement postérieure à l'étape de mise en rotation du socle 14. Le temps de réalisation de l'opération est ainsi amélioré, et l'on s'assure que le dispositif de mesure 1 est fixé de manière durable avec une orientation angulaire conforme au dernier angle de déphasage mesuré.

Le seuil maximal est par exemple inférieur ou égal à 2°, de préférence encore inférieur ou égal à 1° et le seuil minimal est par exemple supérieur à -2°, de préférence encore supérieur ou égal à -1°, le seuil maximal étant supérieur au seuil minimal.

Une information de la valeur du deuxième angle de déphasage est stockée par le capteur de position 10, ladite information pouvant être stockée matériellement et/ou numériquement.

Dans le cas où la valeur est stockée matériellement, le procédé de réglage comprend par exemple une étape de gravure de la valeur du deuxième angle de déphasage, par exemple une gravure sur le boîtier 20 du capteur de position 10. Alternativement, une étiquette comportant la valeur du deuxième angle peut être collée sur le boîtier 20.

Dans le cas où la valeur est stockée numériquement, le dispositif de mesure peut comprendre un moyen de stockage interne. Alternativement, le stockage peut être fait à distance de manière externe au dispositif de mesure 1.

Dans une telle configuration, le procédé de réglage n'a besoin d'être réalisé qu'une seule fois à la mise en service de la machine électrique tournante 2 et du dispositif de mesure 2 associé et le réglage peut être effectué à nouveau après une opération de maintenance visant à changer un élément du circuit électrique, par exemple un onduleur connecté aux phases de la machine électrique tournante. 2

On notera par ailleurs que l'invention n'est pas limitée au mode de réalisation décrit précédemment. Il apparaîtra en effet à l'homme du métier que diverses modifications peuvent être apportées au mode de réalisation décrit ci-dessus, à la lumière de l'enseignement qui vient de lui être divulgué.

Dans la présentation détaillée de l'invention qui est faite précédemment, les termes utilisés ne doivent pas être interprétés comme limitant l'invention au mode de réalisation exposé dans la présente description, mais doivent être interprétés pour y inclure tous les équivalents dont la prévision est à la portée de l'homme de l'art en appliquant ses connaissances générales à la mise en oeuvre de l'enseignement qui vient de lui être divulgué.

## Revendications

1. Procédé de réglage d'un dispositif de mesure (1) comprenant au moins un capteur de position (10) pour une machine électrique tournante (2), comprenant un rotor et un stator (3), le procédé comprenant :
- le positionnement du dispositif de mesure (1) sur le stator (3), en regard d'une cible fixée au rotor définissant une orientation d'origine ;
- la fixation du dispositif de mesure (1) sur le stator par des éléments de fixation (12) du dispositif de mesure (1), dans une position de réglage desdits éléments de fixation (12) ;
- une première mise en rotation du rotor autour d'un axe de rotation (100) du rotor par un arbre extérieur à la machine électrique (2) pour un nombre déterminé de révolutions du rotor ;
- la mesure d'un signal électrique du stator (3) sur au moins une phase du stator (3) et la mesure d'un signal électrique du capteur de position (10) ;
- le calcul d'un premier angle de déphasage entre le signal électrique du capteur de position (10) et le signal électrique de la phase du stator (3) ;
- la rotation d'un socle (14) du dispositif de mesure (1) autour de l'axe de rotation (100) du rotor de l'orientation d'origine vers une orientation corrigée, l'angle entre l'orientation d'origine et l'orientation corrigée étant égal à l'angle de déphasage calculé ;
- une deuxième mise en rotation du rotor par l'arbre extérieur pour un nombre déterminé de révolutions du rotor ;
- le calcul d'un deuxième angle de déphasage entre le signal électrique du capteur de position (10) et le signal électrique de la phase du stator ;
- dans le cas où le deuxième angle de déphasage se trouve en dehors d'un intervalle défini par un seuil maximal et un seuil minimal, une itération des étapes précédentes, à partir de la première mise en rotation du rotor, est réalisée en définissant l'orientation corrigée comme nouvelle orientation d'origine ;
- la fixation du dispositif de mesure (1) sur le stator par les éléments de fixation (12), selon l'orientation corrigée déterminée, dans une position d'exploitation des éléments de fixation (12).

2. Procédé de réglage selon la revendication 1, **caractérisé en ce que** le seuil maximal est inférieur ou égal à 2°, de préférence encore inférieur ou égal à 1° et le seuil minimal est supérieur à -2°, de préférence encore supérieur ou égal à -1°, le seuil maximal étant supérieur au seuil minimal.

3. Procédé de réglage selon la revendication précédente, **caractérisé en ce que** le signal électrique du capteur de position (10) et le signal électrique de la phase du stator (3) sont mesurés à chaque révolution du rotor, un signal électrique moyen du capteur de position (10) et un signal électrique moyen de ladite au moins une phase du stator (3), calculés à partir des mesures successives au cours de chacune des révolutions.

4. Procédé de réglage selon l'une quelconque des revendications précédentes, **caractérisé en ce que** la mesure du signal électrique du stator (3) est réalisée sur trois ou six phases du stator (3).

5. Procédé de réglage selon l'une quelconque des revendications précédentes, **caractérisé en ce que** le nombre de révolution du rotor est supérieur ou égal à 2 révolutions.

6. Procédé de réglage selon l'une quelconque des revendications précédentes, caractérisé en ce lors de la mise en rotation du rotor, l'arbre extérieur entraine le rotor à une vitesse de rotation déterminée, la vitesse de rotation étant de préférence comprise entre 200 tours/min et 1500 tours/min.

7. Procédé de réglage selon l'une quelconque des revendications précédentes, **caractérisé en ce que** dans la position de position de réglage, un couple de serrage de réglage, notamment compris entre 0,8 N.m et 1,2 N.m, notamment compris entre 0,9 N.m et 1,1 N.m. est appliqué aux éléments de fixation (12) et, dans la position d'exploitation, un couple de serrage d'exploitation, notamment compris entre 3 N.m et 4 N.m est appliqué aux éléments de fixation (12).

8. Procédé de réglage selon l'une quelconque des revendications dépendantes, **caractérisé en ce qu'**une information de la valeur du deuxième angle de déphasage est stockée par le capteur de position (10), ladite information pouvant être stockée matériellement et/ou numériquement.

9. Dispositif de mesure pour la mise en oeuvre d'un procédé de réglage selon l'une quelconque des revendications 1 à 8, le dispositif de mesure comprenant :
- un capteur de position (10) pour une machine électrique tournante (2), ladite machine tournante (2) comprenant un rotor et un stator (3) ;
- un socle (14) mobile en rotation entre une orientation d'origine et une orientation corrigée dans lequel est logé le capteur de position (10) ;
- des éléments de fixation (12) mobiles entre une position de réglage et une position d'exploitation configurés pour fixer le socle (14) à une extrémité axiale du stator (3) de la machine électrique (2) ;
le dispositif de mesure (1) étant **caractérisé en ce que** le socle (14) comprend une denture (16) configurée pour coopérer avec une denture d'une broche extérieure pour entraîner le capteur de position (10) et le socle (14) en rotation.

10. Machine électrique tournante comprenant un stator (3), un rotor et un dispositif de mesure (1) selon la revendication 9.

11. Engin de mobilité, **caractérisé en ce qu'**il comprend une machine électrique (2) selon la revendication 10.
